# EUROPEAN PATENT APPLICATION

(11) **EP 2 439 609 A2**
(43) Date of publication of application: **11.04.2012**
(21) Application number: 11156326.8
(22) Date of filing: 28.02.2011
(51) Int. Cl.: G06F 1/18, G06F 1/16

(54) **Casing for electronic device**

(30) Priority: 17.09.2010 CN 201010284542
(71) Applicant: Hannspree, Inc., Taipei City (TW)
(72) Inventor: Liou, Guan-De, 108, Taipei City (TW); Tsai, Stephen, 22159, New Taipei City (TW); Lai, Li-Li, 110, Taipei City (TW); Hwang, Shao-Yu, 106, Taipei City (TW)
(74) Representative: Wright, Howard Hugh Burnby

(57) **Abstract**

A casing (40) for an electronic device (300) includes a casing body (4) that is transparent at least in part and that defines at least one chamber (43, 461), a receptacle (5) to communicate fluidly with the chamber (43, 461) and containingat least one liquidbody (53, 531, 532, 533) having a predetermined color, and a control module (6) connected to the receptacle (5) and being operable to permit flow of the liquid body (53, 531, 532, 533) from the receptacle (50 to the chamber (43, 461).

## Description

This invention relates to a casing, and more particularly to a casing for an electronic device having a color that is changeable.

Referring to Fig. 1, a conventional casing 1 for an electronic device, as disclosed in Taiwanese Patent No. M352868, includes a transparent casing body 11, and a resilient component 12 provided on the transparent casing body 11. The transparent casing body 11 defines a chamber 111 for receiving a liquid body 2 of a predetermined color. The resilient component 12 has two micro holes 121 for communicating the chamber 111 with ambient atmosphere. One of the micro holes 121 permits injection of the liquid body 2 into the chamber 111 by using a syringe. The other micro hole 121 permits insertion of an air guide tube (not shown) therethrough to guide air from the chamber 12 to flow externally. Through this configuration, the casing 1 can present a different color by changing the liquid body 2 in the chamber 111.

The main object of the present invention is to provide a casing for an electronic device including a control module that is operable to permit flow of a liquid body from a receptacle into a chamber of the casing so that the chamber can be quickly and easily filled with the liquid body to thereby change the color of the casing.

Another object of the present invention is to provide a casing for an electronic device including a plurality of chamber sections that are adjacent to each other. By filling respectively the chamber sections with liquid bodies, the casing can display a single predetermined color or a color resulting from a mixture of liquid bodies having different colors.

A still another object of the present invention is to provide a casing for an electronic device including a plurality of hollow polyhedron bodies. By filling liquid bodies into chambers of the polyhedron bodies that are arranged in a rectangular matrix, the casing can display a predetermined color or pattern.

The purpose of the present invention and the solution to the conventional technical problems are achieved through employment of the below technical means. According to this invention, a casing for an electronic device comprises a casing body that is transparent at least in part and that defines at least one chamber, a receptacle to communicate fluidly with the chamber and containing at least one liquid body having a predetermined color, and a control module connected to the receptacle and being operable to permit flow of the liquid body from the receptacle to the chamber.

The advantages and beneficial effects of the present invention reside in: Through the configuration of the control module, a user can quickly and easily fill the chamber in the casing body with the liquid body from the receptacle body to thereby change the color of the casing body. Hence, use of the present invention is convenient. Further, through a plurality of the chambers in the casing body that are spaced apart from each other and that are arranged in an outer-to-inner direction, the liquid bodies can be respectively filled into the chambers, so that the casing body can present a single predetermined color or a color resulting from a mixture of the liquid bodies. Moreover, by filling liquid bodies into chambers of hollow polyhedron bodies arranged in the rectangular matrix, the casing body can display a predetermined color or pattern.

Other features and advantages of the present invention will become apparent in the following detailed description of the preferred embodiments of the invention, with reference to the accompanying drawings, in which:
Fig. 1 is a sectional view of a conventional casing for an electronic device;
Fig. 2 is an assembled perspective view of a casing according to the first preferred embodiment of the present invention and a display panel;
Fig. 3 is an exploded perspective view of Fig. 2;
Fig. 4 is a sectional view of the first preferred embodiment;
Fig. 5 is a schematic front view of an outer layer of the first preferred embodiment;
Fig. 6 is a sectional view of a casing according to the second preferred embodiment of the present invention;
Fig. 7 is a sectional view of a casing according to the third preferred embodiment of the present invention;
Fig. 8 is a sectional view of a casing according to the fourth preferred embodiment of the present invention;
Fig. 9 is a sectional view of a casing according to the fifth preferred embodiment of the present invention;
Fig. 10 is a sectional view of a casing according to the sixth preferred embodiment of the present invention;
Fig. 11 is a sectional view of a casing according to the seventh preferred embodiment of the present invention;
Fig. 12 is a sectional view of a casing according to the eighth preferred embodiment of the present invention;
Fig. 13 is a perspective view of a casing according to the ninth preferred embodiment of the present invention;
Fig. 14 is a fragmentary enlarged perspective view of the ninth preferred embodiment, but with a casing body removed; and
Fig. 15 is a schematic front view of the ninth preferred embodiment, illustrating the casing body presenting a pattern or trademark formed from a definite color.

The above-mentioned and other technical contents, features, and effects of this invention will be clearly presented from the following detailed description of nine preferred embodiments in coordination with the reference drawings. Through description of the concrete implementation method, the technical means employed and the effectiveness to achieve the predetermined purposes of the present invention will be thoroughly and concretely understood. However, the enclosed drawings are used for reference and description only, and are not used for limiting the present invention.

Before the present invention is described in greater detail, it should be noted that the same reference numerals have been used to denote like elements throughout the specification.

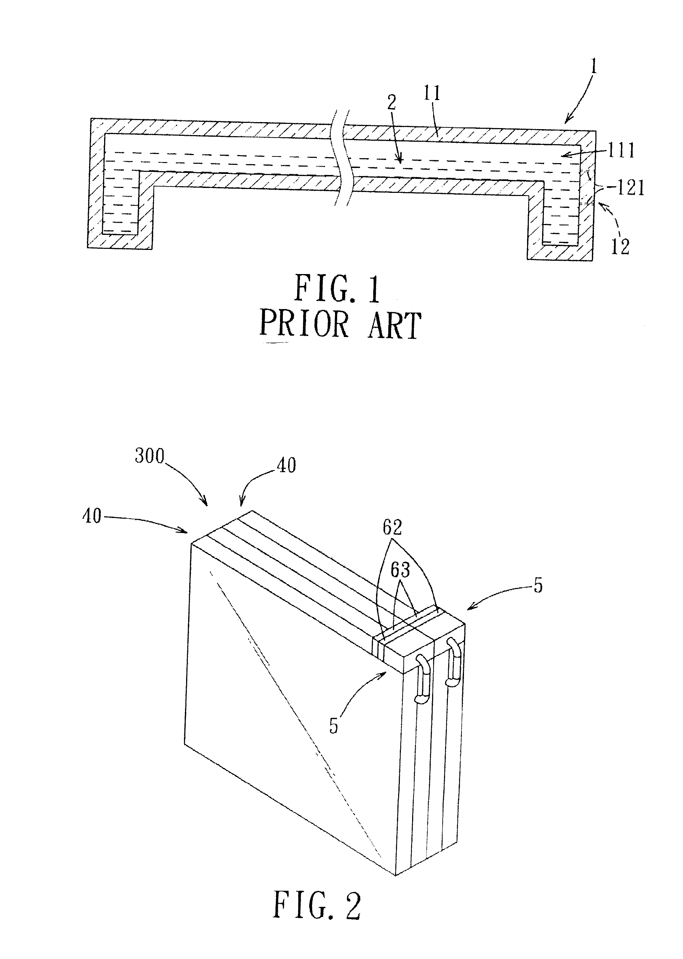

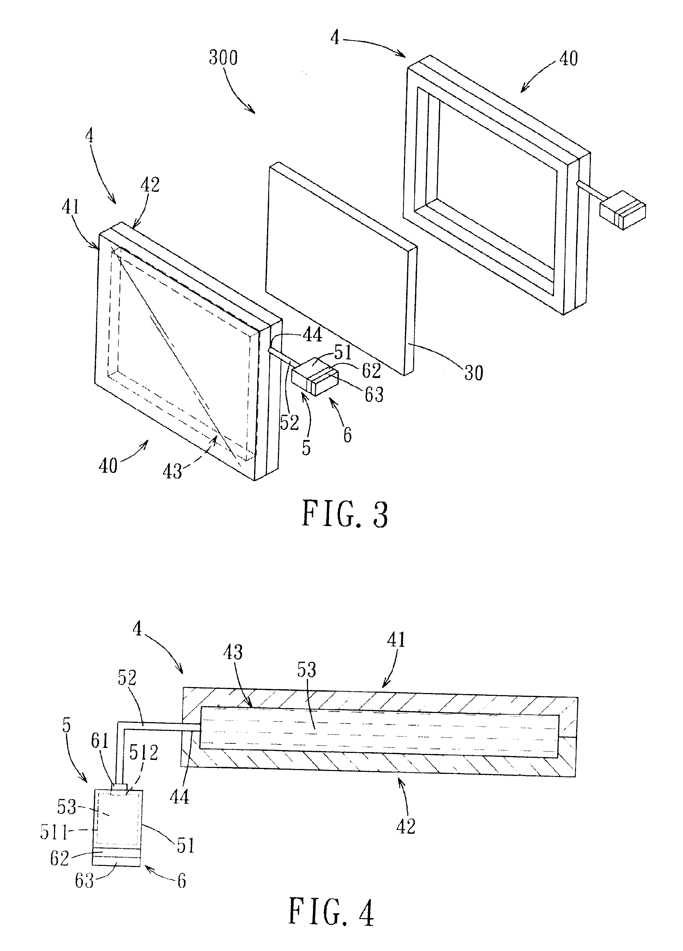

Figs. 2 and 3 illustrate a casing for an electronic device 300 according to the first preferred embodiment of the present invention. The electronic device 300 is exemplified as a flat panel television, and includes two casings 40, and a display panel 30 disposed between the casings 40. Alternatively, the electronic device 300 may be a notebook computer, a tablet computer, a mobile phone, or a personal digital assistant.

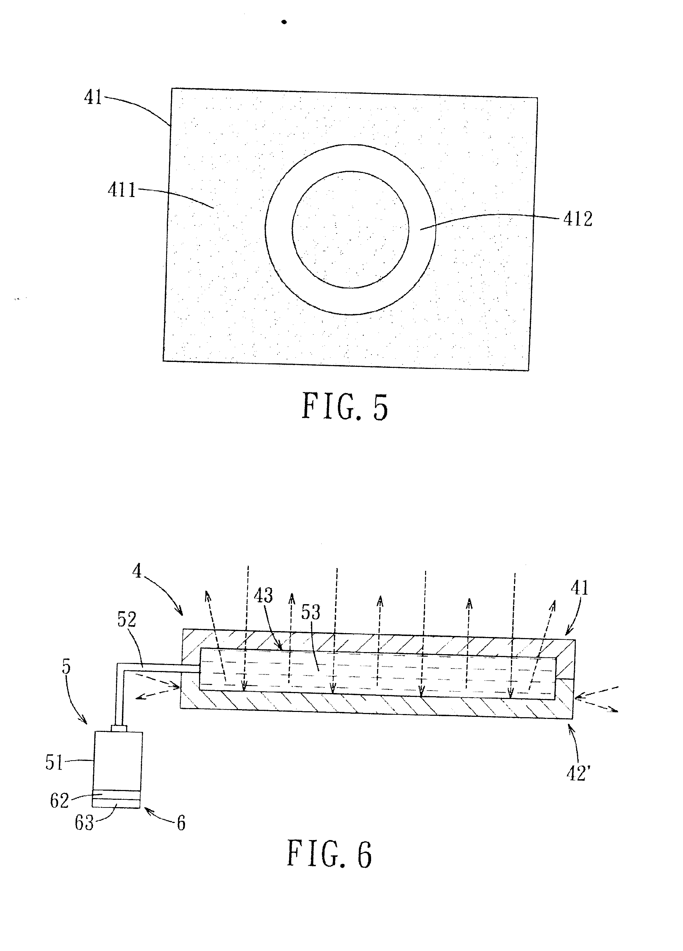

With reference to Figs. 2 to 4, each casing 40 includes a casing body 4 and a receptacle 5. The casing body 4 includes an outer layer 41, and an inner layer 42 connected to an inner side of the outer layer 41 and cooperating with the same to define a chamber 43. The receptacle 5 includes a receptacle body 51 and a flow tube 52. The receptacle body 51 may be disposed on top of the casing body 4, and defines a receiving space 511 containing a liquid body 53 having a predetermined color. The flow tube 52 has two opposite ends connected respectively to a through hole 512 in the receptacle body 51 and a through hole 44 in the casing body 4 so that the receiving space 511 can communicate fluidly with the chamber 43. Through this configuration, the liquid body 53 in the receiving space 511 can flow from the receiving space 511 into the chamber 43 via the flow tube 52. In this embodiment, the outer layer 41 may be transparent, semi-transparent, or partly transparent. The inner layer 42 may be transparent, semi-transparent, or non-transparent. Hence, the color of the liquid body 53 may be visible through the transparent or semi-transparent outer or inner layer 41, 42 or through the partial transparency of the outer layer 41. In the case of the partial transparency of the outer layer 41, the outer layer 41 may include a non-transparent region 411 and a transparent region 412, as shown in Fig. 5. The transparent region 412 may be a pattern, a trademark, or other specific structures. The color of the liquid body 53 may be visible through the transparent region 412 of the outer layer 41.

To enable the user to control flow of the liquid body 53 from the receiving space 511 into the chamber 43, each casing 40 further includes a control module 6 connected to the receptacle 5. The control module 6 includes a control valve 61 disposed on the receptacle body 511 to openably close the through hole 512, a circuit board 62 connected electrically to the control valve 61 through a lead wire (not shown), and an operator 63 that activates the circuit board 62 to control opening or closing of the control valve 61. The operator 63 may be disposed on the receptacle body 51 or on the casing body 4 at a suitable position thereof, and is connected electrically to the circuit board 62 through a lead wire (not shown) . The operator 63 can send a control signal to the circuit board 62 through the lead wire, so that the circuit board 62 can control opening or closing of the control valve 61. Through this configuration, the user can manipulate the operator 63 to open the control valve 61, and permit the liquid body 53 to flow easily from the receiving space 511 to the chamber 43. It is worth mentioning that although the receiving space 511 communicates fluidly with the chamber 43 through the flow tube 52, in an alternative embodiment, the receiving space 511 may communicate directly and fluidly with the chamber 43 through the control valve 61.

Referring to Fig. 6, a casing for an electronic device 300 according to the second preferred embodiment of the present invention has a structure and use substantially similar to that described in the first preferred embodiment. The main difference between the first and second preferred embodiments resides in the construction of the inner layer 42' of the casing body 4. In this embodiment, the inner layer 42' is configured as a reflecting mirror to reflect light from an external light source, such as sunlight or a fluorescent lamp. Through this configuration, an outer periphery of the inner layer 42' can directly reflect light from the external light source so that the casing body 4 can emit light. When the inner layer 42' reflects light from the external light source that passes through the outer layer 41 and the liquid body 53, the casing body 4 can emit light having the same color as the liquid body 53.

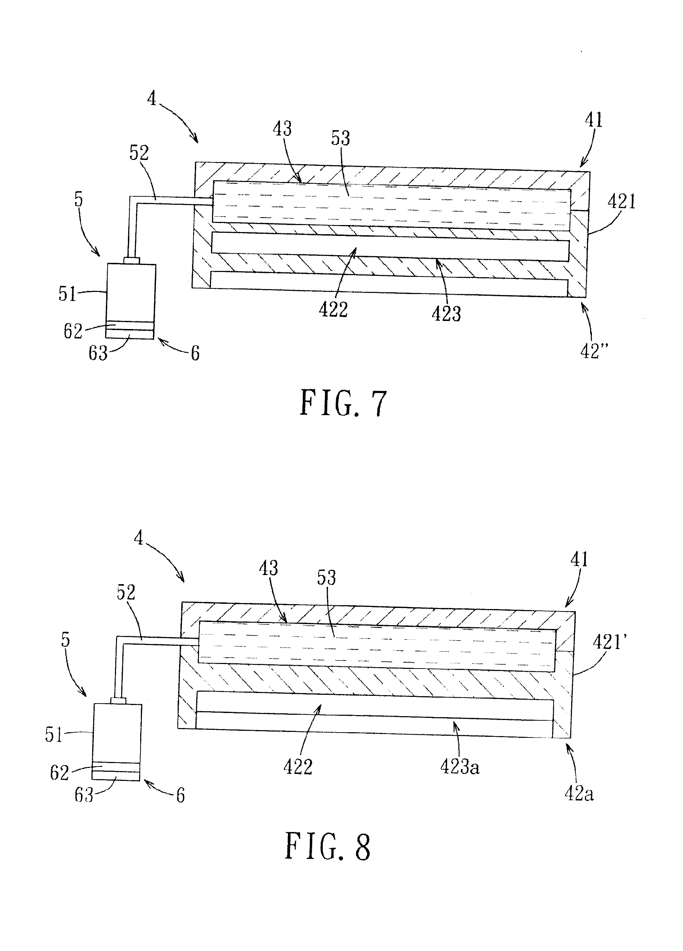

Referring to Fig. 7, a casing for an electronic device 300 according to the third preferred embodiment of the present invention has a structure and use substantially similar to that described in the first preferred embodiment. The main difference between the first and third preferred embodiments resides in the construction of the inner layer 42" of the casing body 4.

In this embodiment, the inner layer 42" includes a transparent casing 421 deposited in an inner side of the outer layer 41, and a light-emitting module 422 deposited in the transparent casing 421. The transparent casing 421 and the outer layer 41 define a chamber 43, and the transparent casing 421 includes a closed receiving space 423 spaced apart from the chamber 43. The light-emitting module 422 is disposed in the closed receiving space 423, and may be configured as a liquid crystal display backlight module, a plurality of lamp tubes, or a plurality of light-emitting diodes. The light-emitting module 422 emits light toward the liquid body 53 in the chamber 43, so that the casing body 4 can emit light having the same color as the liquid body 53.

Referring to Fig. 8, a casing for an electronic device 300 according to the fourth preferred embodiment of the present invention has a structure and use substantially similar to that described in the third preferred embodiment . However, in this embodiment, the inner layer 42a includes a transparent casing 421' deposited in an inner side of the outer layer 41, and a light-emitting module 422 deposited in the transparent casing 421' . The transparent casing 421' and the outer layer 41 define a chamber 43. The transparent casing 421' has an opened receiving space 423a. The light-emitting module 422 is disposed on an inner surface of the inner layer 42a that is proximate to the display panel 30 (see Fig. 3), and emits light toward the liquid body 53 in the chamber 43, so that the casing body 4 can emit light having the same color as the liquid body 53.

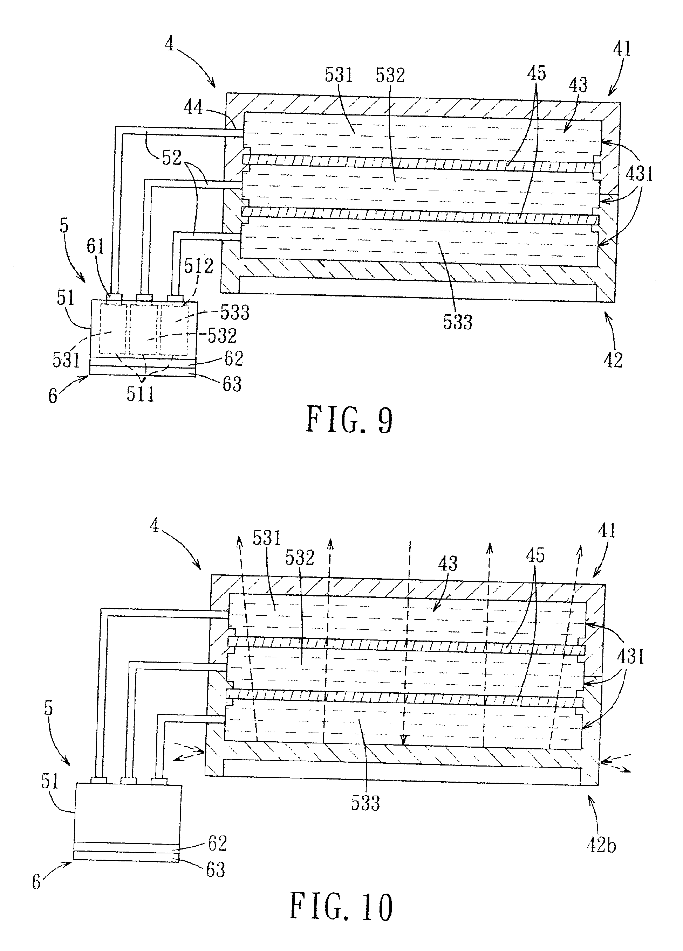

Referring to Fig. 9, a casing for an electronic device 300 according to the fifth preferred embodiment of the present invention has a structure and use substantially similar to that described in the first preferred embodiment. The main difference between the first and fifth preferred embodiments resides in the construction of the casing body 4 . In this embodiment, the casing body 4 includes a plurality of spaced-apart transparent partitions 45 disposed between the outer and inner layers 41, 42 and dividing the chamber 43 into a plurality of chamber sections 431 that are arranged from an outer side to an inner side of the casing body 4. The receptacle body 51 includes a plurality of receiving spaces 511 each containing a liquid body 531, 532, 533 having a predetermined color. The colors of the liquid bodies 531, 532, 533 are different from each other. The receptacle 5 includes a plurality of the flow tubes 52 each having two opposite ends connected respectively to one of the through holes 512 in the receptacle body 51 and one of the through holes 44 in the casing body 4. Through such a configuration, each receiving space 511 can communicate fluidly with one of the chambers 43 through a respective flow tube 52.

Further, in this embodiment, the control module 6 includes a plurality of the control valves 61 each disposed on the receptacle body 51 to openably close a respective through hole 512. The operator 63 is used to activate the circuit board 62 to control opening or closing of each control valve 61. Through this configuration, the user canmanipulate the operator 63 to control the opening or closing of one or more of the control valves 61, so that the liquid body 531, 532, 533 in one of the receiving spaces 511 can flow into and fill the respective chamber 43. At this time, the casing body 4 can display a single predetermined color. When the liquid bodies 531, 532, 533 from two or more of the receiving spaces 511 are permitted to flow into and fill the respective chambers 43, the casing body 4 can display a color that is a mixture of two or more of the liquid bodies 531, 532, 533.

Moreover, in this embodiment, two transparent partitions 45 are exemplified. One of the transparent partitions 45 is fitted to the outer layer 41. The other transparent partition 45 is fitted to the inner layer 42. The partitions 45 divide the chamber 43 into three chamber sections 431. The receptacle 5 has three receiving spaces 511 that contain respectively the liquid bodies 531, 532, 533. The colors of the liquid bodies 531, 532, 533 are red, green, and blue, respectively. Bymatchingandmixingthethreeprimarycolors, the casing body 4 can present a desired specific color. The number of the chamber sections 431, the number of the receiving spaces 511, and the color of the liquid bodies 531, 532, 533 are not limited to the aforesaid disclosures, and may be altered according to the requirements.

Referring to Fig. 10, a casing for an electronic device 300 according to the sixth preferred embodiment of the present invention has a structure and use substantially similar to that described in the fifth preferred embodiment. However, in this embodiment, the inner layer 42b is configured as a reflecting mirror similar to that described in the second preferred embodiment. The outer periphery of the inner layer 42b can directly reflect the external light so that the casing body 4 can emit the light. Further, when the inner layer 42b reflects the external light that passes through the outer layer 41 and one of the liquid bodies 531, 532, 533, the casing body 4 can emit light having a color similar to said one of the liquid bodies 531, 532, 533. When the inner layer 42b reflects the external light that passes through the outer layer 41 and two or more of the liquid bodies 531, 532, 533, the casing body 4 can emit light having a color that is a mixture of the two or more of the liquid bodies 531, 532, 533.

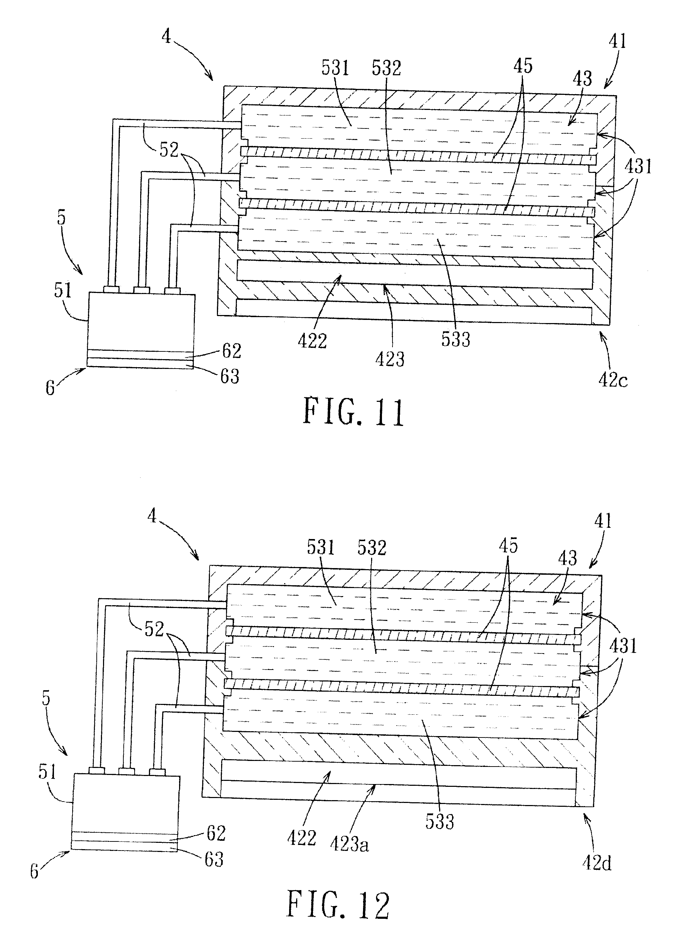

Referring to Fig. 11, a casing for an electronic device 300 according to the seventh preferred embodiment of the present invention has a structure and use substantially similar to that described in the fifth preferred embodiment. However, in this embodiment, the inner layer 42c is transparent, and has a closed receiving space 423 spaced apart from the chamber 43. A light-emitting module 422 is disposed in the closed receiving space 423. The light-emitting module 422 emits light toward the liquid bodies 531, 532, 533 in the respective chamber sections 431. Through this configuration, the casing body 4 can emit light having the same color as one of the liquid bodies 531, 532, 533, or a color formed from a mixture of the two or more of the liquid bodies 531, 532, 533.

Referring to Fig. 12, a casing for an electronic device 300 according to the eighth preferred embodiment of the present invention has a structure and use substantially similar to that described in the seventhpreferredembodiment . However, in this embodiment, the inner layer 42d has an opened receiving space 423a. The light-emitting module 422 is disposed on an inner surface of the inner layer 42d. Through this configuration, the light-emitting module 422 can emit light toward the liquid bodies 531, 532, 533 in the respective chamber sections 431, and the casing body 4 can emit light having the same color as one of the liquid bodies 531, 532, 533, or a color formed from a mixture of the two or more of the liquid bodies 531, 532, 533.

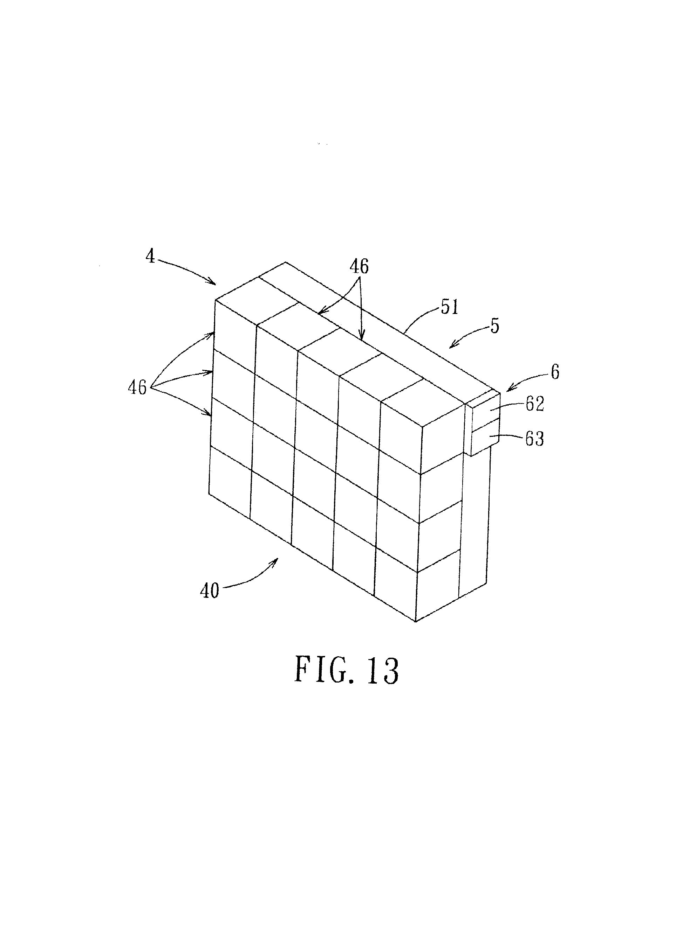

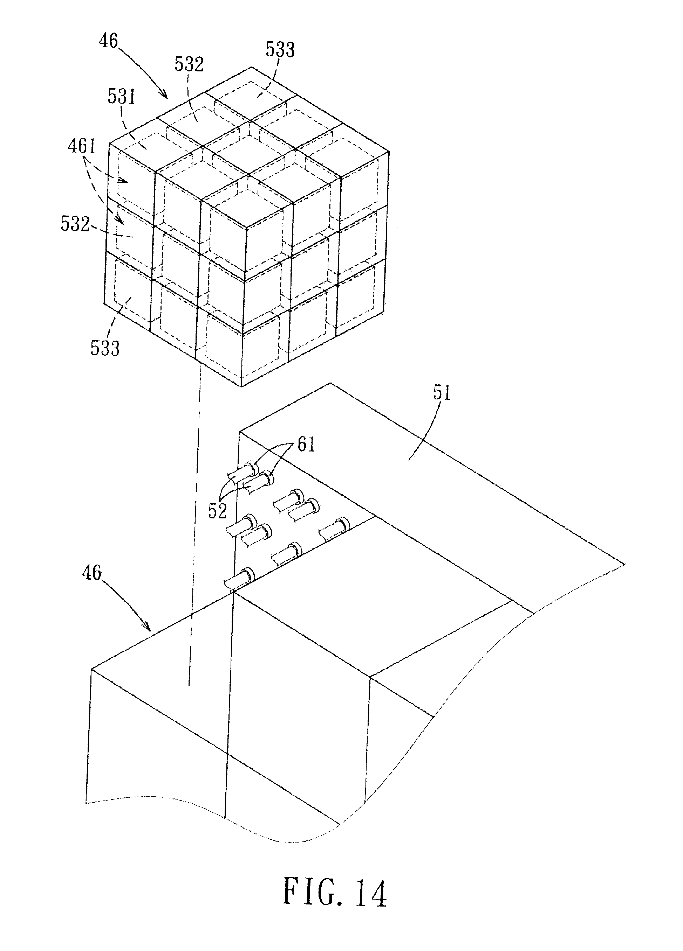

Referring to Figs. 13 and 14, a casing for an electronic device 300 according to the ninth preferred embodiment of the present invention has a use substantially similar to that described in the first preferred embodiment, but has a structure different from that described in the first preferred embodiment. In this embodiment, the casing body 4 includes a plurality of interconnected transparent polyhedron bodies 46. Each two adjacent ones of the polyhedron bodies 46 are connected to each other through a suitable inter-engaging method. Each polyhedron body 46 includes a plurality of chambers 461 that are adjacent to each other. The receptacle body 51 of the receptacle 5 includes a plurality of receiving spaces 511 (see Fig. 9). Each receiving space 511 contains a liquid body 531, 532, 533 having a predetermined color, and communicates fluidly with a respective chamber 461 through a flow tube 52, as shown in Fig. 9. In this embodiment, each polyhedron body 46 is configured as a hexahedron. The receiving chambers 461 are arranged in a rectangular matrix. Preferably, the receiving chambers 461 are arranged in a three-dimensional rectangular matrix. For example, each face of the polyhedron body 46 is provided with nine chambers 461. The number of the liquid bodies 531, 532, 533 is three. The colors of the liquid bodies 531, 532, 533 are red, green, and blue, respectively. It is worth mentioning that, alternatively, the polyhedron bodies 46 may be arranged in a two-dimensional rectangular matrix. That is, a vertical face of each polyhedron body 46, whether it is distal from or proximate to the receptacle body 51, is provided with nine chambers 461.

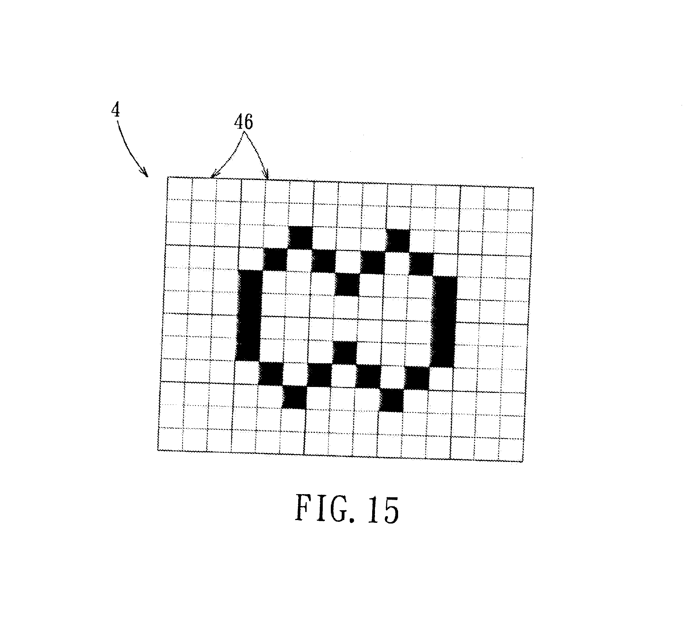

The control module 6 includes a plurality of control valves 61 each disposed on the receptacle body 51 to openably close the respective through hole 512 (see Fig. 9) . The user can manipulate the operator 63 to control opening or closing of each control valve 61, so that each liquid body 531, 532, 533 can flow from the respective receiving space 511 to the chamber 4 6I in the respective polyhedron body 46. Bymatching and mixing the three different primary colors of the liquid bodies 531, 532, 533, the casing body 4 can present a desired specific color. When the liquid bodies 531, 532, 533 are filled into some particular chambers 461 of the polyhedron bodies 46, the casing body 4 can present a pattern or trademark formed from a specific color, as shown in Fig. 15. The number of the chambers 461, the number of the liquid bodies 531, 532, 533, and the colors of the liquid bodies 531, 532, 533 are not limited to the aforesaid disclosures, and may be altered according to the requirements. Further, each polyhedron body 46 may be configured as other type of polyhedron bodies, for example, tetrahedron. Moreover, the arrangement of the chambers 461 may also be altered according to the requirements.

In summary, the casing 40 of the present invention is provided with the control module 6 so as to facilitate the user to operate the operator 63. The operator 63, for example in the first preferred embodiment, is operable to permit quick and easy flow of the liquid body 53 from the receptacle body 51 to the chamber 43 of the casing body 4, thereby enhancing use of the present invention. Further, in the fifth preferred embodiment, the casing body 4 is provided with the plurality of the chambers 43 that are spaced apart from each other, that are arranged from the outer side to the inner side of the casing body 4, and that can be filled with the respective liquid bodies 531, 532, 533, so that the casing body 4 can present one kind of a desired specific color or a color resulting from a mixture of the liquid bodies 531, 532, 533. Moreover, in the ninth preferred embodiment, through the rectangular matrix arrangement of the chambers 461 of the polyhedron bodies 46, when the liquid bodies 531, 532, 533 are filled into the respective chambers 461, the casing body 4 can present a predetermined color or pattern. Hence, the objects of the present invention can be realized.

## Claims

1. A casing (40) for an electronic device (300), comprising:
a casing body (4) that is transparent at least in part and that defines at least one chamber (43, 461); i
**characterized by**
a receptacle (5) to communicate fluidly with said chamber (43, 461) and containing at least one liquid body (53, 531, 532, 533) having a predetermined color; and -
a control module (6) connected to said receptacle (5) and being operable to permit flow of said liquid body (53, 531, 532, 533) from said receptacle (5) to said chamber (43, 461).

2. The casing (40) of claim 1, wherein said casing body (4) includes an outer layer (41), and an inner layer (42, 42', I 42", 42a) connected to an inner side of said outer layer (41) and cooperating with said outer layer (41) to define said chamber (43).

3. The casing (40) of claim 2, wherein said outer layer (41) is entirely transparent, semi-transparent, or partly transparent.

4. The casing (40) of claim 3, wherein said inner layer (42, 42', 42", 42a) is entirely transparent, semi-transparent, or non-transparent.

5. The casing (40) of claim 3 or claim 4, **characterized in that** said inner layer (42') is configured as a reflecting mirror for reflecting an external light.

6. The casing (40) of any of claims 3 to 5, wherein said inner layer (42", 42a) is transparent, and includes a light-emitting module (422) mounted to said inner layer (42", 42a), I said light-emitting module (422) being one of a liquid crystal display backlight module, a plurality of lamp tubes, and a plurality of light-emitting diodes.

7. The casing (40) of claim 6, wherein said inner layer (42") has a closed receiving space (423) spaced apart from said chamber (43), said light-emitting module (422) being disposed in said closed receiving space (423) and emitting light toward said liquid body (53) in said chamber (43).

8. The casing (40) of claim 6, wherein said inner layer (42a) has an opened receiving space (423a), said light-emitting module (422) being disposed on an inner surface of said inner layer (42a) and emitting light toward said liquid body (53) in said chamber (43).

9. The casing (40) of any preceding claim, wherein said control module (6) includes a control valve (61) provided on said receptacle (5) to control flow of said liquid body (53), a circuit board (62) connected electrically to said control valve (62), and an operator (63) to control opening or closing of said control valve (61) through activation of said circuit board (62).

10. The casing (40) of any preceding claim, wherein said casing body (4) includes an outer layer (41), an inner layer (42, 42c, 42d) connected to an inner side of said outer layer (41), and a plurality of spaced-apart transparent partitions (45) disposed between said inner and outer layers (41, 42c, 42d) and dividing said chamber (43) into a plurality of chamber sections (431), said receptacle (5) containing a plurality of said liquid bodies (531, 532, 533) each having a predetermined color, said control module (6) being operable to permit flow of said liquid bodies (531, 532, 533) to said chamber sections (431), respectively.

11. the casing (40) of claim 10, wherein said control module (6) includes a plurality of control valves (61) provided on said receptacle (5) to control flow of said liquid bodies (531, 532, 533), a circuit board (62) connected electrically to said control valves (61), and an operator (63) to control opening or closing of said control valves (61) through activation of said circuit board (62).

12. The casing (40) of any preceding claim , wherein said casing body (4) includes a plurality of interconnected transparent polyhedron bodies (46), each of said polyhedron bodies (46) including a plurality of said chambers (461) that are adjacent to each other, said receptacle (5) containing a plurality of liquid bodies (531, 532, 533) each having a predetermined color, said control module (6) being operable to permit flow of said liquid bodies (531, 532, 533) to said chambers (461), respectively.

13. The casing (40) of claim 12, **characterized in that** each of said polyhedron bodies (46) is a hexahedron body, and said chambers (461) are arranged in a rectangular matrix.

14. The casing (40) of claim 13, wherein said chambers (461) are arranged in a three-dimensional rectangular matrix, said control module (6) including a plurality of control valves (61) provided on said receptacle (5) to control flow of said liquid bodies (531, 532, 533), respectively, circuit board (62) connected electrically to said control valves (61), and an operator (63) to control opening or closing of said control valves (61) through activation of said circuit board (62).
